Europäisches Patentamt

European Patent Office

Office européen des brevets

(11) Veröffentlichungsnummer: **0 447 923 A1**

# (12) EUROPÄISCHE PATENTANMELDUNG

(21) Anmeldenummer: 91103760.4

(51) Int. Cl.5: **C09K 3/32**, C02F 1/68

(22) Anmeldetag: 12.03.91

(30) Priorität: 17.03.90 DE 4008693

(43) Veröffentlichungstag der Anmeldung:
25.09.91 Patentblatt 91/39

(84) Benannte Vertragsstaaten:
AT BE CH DE DK ES FR GB GR IT LI NL SE

(71) Anmelder: HOECHST AKTIENGESELLSCHAFT
Postfach 80 03 20
W-6230 Frankfurt am Main 80(DE)

(72) Erfinder: Fabian, Klaus Hans-Georg
Drosselweg 11
W-6239 Kriftel(DE)

(54) Polymere Öladsorptionsmittel.

(57) Feste Adsorptionsmittel zum Aufsaugen bzw. Binden von Adsorbaten aus der Gruppe Mineralöle, Esteröle, flüssige Kohlenwasserstoffe und andere flüssige inerte organische Verbindungen oder deren Gemischen, die als adsorptive Komponenten feinteiliges bis granulatförmiges, in Wasser und in den Adsorbaten nicht lösliches Polyvinylacetal, vorzugsweise polyvinylbutyral, enthalten.

Verwendung der Mittel zum Aufsaugen bzw. adsorptiven Binden und gegebenenfalls nachfolgenden Entsorgen oder Aufarbeiten von gegebenenfalls die Umwelt akut belastenden Produkten aus der Gruppe Erdöl, Teeröl, Schmieröl, Schmierfett, Mineralöl, Petroleum, Hydrauliköl, Paraffinöl, Spindelöl, leichtes und schweres Heizöl, Dieselöl, Kerosin, Benzin, Benzol, flüssige organische Pestizide oder Pestizidlösungen, pflanzliche Öle und Fette, tierische Öle und Fette, gegebenenfalls wäßrige Emulsionen oder Suspensionen der genannten Produkte.

EP 0 447 923 A1

Die Erfindung betrifft feste Adsorptionsmittel zum Aufsaugen bzw. Binden von Adsorbaten aus der Gruppe Mineralöle, Esteröle, flüssige Kohlenwasserstoffe und andere flüssige inerte organische Verbindungen oder deren Gemischen, wobei diese Mittel als adsorptive Komponente feinteiliges bis granulatförmiges, in Wasser und in den Adsorbaten nicht lösliches Polyvinylacetal enthalten, sowie deren Verwendung.

Die Adsorption besteht bekanntlich in der selektiven Anreicherung bestimmter Stoffe an der Oberfläche meist fester Hilfsstoffe. Diese Hilfsstoffe, Adsorptionsmittel genannt, besitzen im allgemeinen große Oberflächen, im wesentlichen in Form von Poren, und werden in Form von Granulaten oder auch als Pulver verwendet. Die Korngrößen der Granulate können dabei Durchmesser bis zu einigen mm besitzen.

Die gebräuchlichsten und insbesondere technisch verwendeten Adsorptionsmittel sind z.B. Aktivkohle und Knochenkohle, Aluminiumoxidgel, Silicagel, Bleicherden, Kieselgur, aktivierter Bauxit und bestimmte Alumosilikate. Nach der Art der Bindung, die der adsorbierte Stoff mit dem Adsorbens eingeht, unterscheidet man bekanntlich zwischen physikalischer und chemischer Adsorption, wobei wiederum für technische Stofftrennungen nur die physikalische Adsorption von Bedeutung ist. Diese erfolgt bekanntlich lediglich aufgrund von zwischenmolekularen Kräften (van der Waals-Kräfte) und ist reversibel, wohingegen die chemische Adsorption, auch Chemiesorption genannt, häufig irreversibel ist.

Die reine physikalische Adsorption besteht bekanntlich in der Ausbildung monomolekularer, bei höheren Beladungen auch multimolekularer Schichten auf den nebenvalenzaktiven Oberflächen des Adsorptionsmittels. Dabei gilt hinsichtlich der Temperaturabhängigkeit der Adsorption, daß die Gleichgewichtsbeladungen bei konstanter Zusammensetzung der fluiden Phase mit steigender Temperatur abnehmen. Dies bedeutet, daß durch Erwärmung die Adsorptionskraft vermindert und durch Abkühlung erhöht wird. Wie ferner bekannt ist, sind die Adsorptionsgleichgewichte außerdem stark nichtlinear. Die Adsorptionsgeschwindigkeit, d.h. die Geschwindigkeit, mit der sich das Adsorptionsgleichgewicht einstellt, hängt im wesentlichen von der Diffusion des adsorbierten Stoffs im Adsorptionsmittel ab. Dies bedeutet, daß vor allem die Eigenschaften des Adsorptionsmittels, nämlich Porosität, Korngröße und die chemische Zusammensetzung sowie andererseits auch das Molekulargewicht und die Molekülstruktur des Adsorbats maßgebend sind. Die Zeiten für die Einstellung des Adsorptionsgleichgewichts können bei technischen Adsorptionsmitteln zwischen einigen Sekunden und Minuten liegen.

Ein wesentlicher Vorteil der Adsorption ist bekanntlich auch ihre Selektivität, die vor allem bei niedrigen Konzentrationen des zu adsorbierenden Stoffs sehr hoch sein kann.

Beispiele für die technische Anwendung von Adsorptionsmitteln sind u.a. die Lösungsmittelrückgewinnung aus Luft mittels Aktivkohle in mit leicht siedenden Lösungsmitteln arbeitenden Betrieben sowie die Entfernung organischer Stoffe mit Aktivkohle bei der Wasserreinigung. Auf dem letzteren Sektor stellt in neuerer Zeit bekanntlich die sog. Ölpest ein immer drängenderes Problem der Wasserverschmutzung durch organische Substanzen in der technisierten Welt dar. Der Ausdruck Ölpest ist eine drastische Bezeichnung für die Wasserverunreinigung durch Mineralöle infolge unqualifizierter und sorgloser Handhabung, korrodierter Öltanks, Transportschäden auf Land und See mit der Folge von vielerlei Deplazierungen von Mineralölen bzw. deren Veredlungsvarianten. Als Folge droht bzw. besteht bereits weltweit eine Verschmutzung von Grundwasser, Binnengewässern und Meeren. Dabei ist hervorzuheben, daß einerseits bereits 1 l Mineralöl bis zu 5 Millionen l Wasser als Trinkwasser ungenießbar machen kann und andererseits der jährliche Gesamteintrag von Öl in die Meere in letzter Zeit auf ca. 6 Millionen Tonnen geschätzt wird. Davon sollen bekanntlich etwa 35 % aus Tankern infolge Tankreinigung (ca. 23 %) und Unfällen (ca. 10 %), 10 % aus natürlichen Quellen und 1 % aus Bohrinseln im Meer stammen, aber 54 % durch Flüsse, Regen und andere Einwirkungen vom Land ins Meer gelangen. Aufgrund des heutigen Erkenntnisstandes erscheint es als erhärtet, daß die Ölpest die gesamte ozeanische Organismenwelt bedroht und das ökologische Gleichgewicht auf der Erde beeinträchtigt. Trotz dieser bedrohlichen Situation haben die bisherigen Beseitigungs- und Vernichtungsmaßnahmen gegenüber wasserverschmutzendem Öl offensichtlich lediglich mehr oder weniger lokalen Charakter im akuten Katastrophenfall. Dabei versucht man im allgemeinen zunächst mit mechanischen Mitteln eine Begrenzung der Ursache zu erreichen und außerdem mit diversen Ölbindemitteln, wie z.B. Kunststoffschäumen, Gemischen aus Torf und Eisenpulvern, Stroh, Papierfasern und dergleichen das Öl aufzusaugen und entweder aus dem Wasser zu entfernen, oder durch Detergentien zum Absinken zu bringen. Auch das Abschöpfen des Öls von der Meeresoberfläche bei ruhiger See mit Spezialschiffen wird verschiedentlich häufiger praktiziert. Bei kleineren Verunreinigungen auf festen Flächen behilft man sich mit der Abtragung des verunreinigten Bodens oder dessen oberflächlicher Behandlung mit Ölaufsaug- oder Ölbindemitteln, wie z.B. dem Tonmineral Attapulgit (Magnesium-Aluminium-Silikat) oder anderen Adsorptionsmitteln.

Als solche kommen u.a. z.B. feinteilige Adsorptionsmittel wie Aerosil, Diatomeenerde, Cellulose, Getreidemehl, Holzmehl, Sägespäne, Kieselgur, Kieselgel, Ziegelmehl, Lehmstaub, Aktivkohle, Bleicherde oder gegebenenfalls auch Kalkmehl oder Zementmehl zur Anwendung.

Zur Bekämpfung von Ölpest auf festen Oberflächen, insbesondere z.B. auf Straßen, Betonflächen oder textilen Bodenbelägen sowie gegebenenfalls auch auf Wasserflächen werden die Ölschichten im allgemeinen mit einem feinteiligen Adsorptionsmittel in der erforderlichen Menge und Schichtdicke bestreut, so daß das Öl von dem Adsorptionsmittel aufgesaugt wird. Das mit Adsorbat beladene Adsorptionsmittel soll dabei in einer möglichst partikulierten oder zusammengebackenen Form ohne anhaftende flüssige Ölreste anfallen, damit es mechanisch eingesammelt und einer Entsorgung zugeführt werden kann. In manchen Fällen werden gegebenenfalls auch saugfähige Putzwollen, Putzlappen oder Papier auf Ölschichten aufgelegt, so daß diese das Öl bis zu ihrem Sättigungsgrad adsorptiv aufsaugen und dadurch eine Ölbeseitigung bzw. -entsorgung ermöglichen können.

Die bisher bekannt gewordenen und u. a. zur Bekämpfung von Ölpest verwendeten Adsorptionsmittel zeigen bei ihrer Anwendung aber gravierende Nachteile, die ihre Anwendbarkeit beschränken oder sogar ausschließen können. Bekannt gewordene diesbezügliche Nachteile sind u.a. unzureichendes Adsorptionsvermögen, zu hoher Rückstands- bzw. Ascheanfall bei der Entsorgung durch Verbrennen, insbesondere bei den anorganischen Adsorptionsmitteln, hydrophiles Verhalten oder starkes Quellen in Wasser anstelle einer bevorzugten Öladsorption, Absinken des mit Adsorbat beladenen Adsorptionsmittels in Wasser, starke Applikationsflächenverschmutzung durch das Adsorptionsmittel selbst, z.B. bei Aktivkohle, störendes Ausbluten von Adsorbat bei der Zwischenlagerung von mit Adsorbat beladenem Adsorptionsmittel.

Ziel der vorliegenden Erfindung war es, ein Adsorptionsmittel verfügbar zu machen, das unter Überwindung der vorstehenden Nachteile einfach und in gleichbleibender Qualität zugänglich ist, sich problemlos und umweltfreundlich anwenden und bei der Entsorgung des Adsorbats durch Verbrennen rückstandslos und schadstofffrei verbrennen läßt, eine hohe adsorptive Bindekraft gegenüber diversen flüssigen organischen Materialien, insbesondere Mineralöl, besitzt und sich nach erfolgter Beladung mit Adsorbat leicht und unproblematisch handhaben, vorzugsweise einsammeln, transportieren, lagern und gegebenenfalls verbrennen, läßt.

Diese Ziel kann gemäß der vorliegenden Erfindung mit Polyvinylacetalen, die in Wasser und in den Adsorbaten nicht löslich sind und vorzugsweise als feinteilige bis granulatförmige Produkte zur Anwendung in Adsorptionsmitteln gelangen, erreicht werden.

Gegenstand der Erfindung ist daher ein festes Adsorptionsmittel zum Aufsaugen bzw. Binden von Adsorbaten aus der Gruppe Mineralöle, Esteröle, flüssige Kohlenwasserstoffe, flüssige inerte organische Verbindungen, wobei das Adsorptionsmittel in den Adsorbaten keine wesentliche Löslichkeit besitzt und die Adsorbate mit Wasser nicht mischbar sind, dadurch gekennzeichnet, daß das Adsorptionsmittel ein feinteiliges bis granulatförmiges, in Wasser nicht lösliches Polyvinylacetal enthält.

Die Polyvinylacetalmoleküle enthalten Acetalreste mit vorzugsweise 1 bis 12 C-Atomen, insbesondere 1 bis 8, besonders bevorzugt 2 bis 6 C-Atomen.

Ein besonders bevorzugtes Polyvinylacetal ist Polyvinylbutyral, dessen Makromoleküle vorzugsweise 10 bis 28 Gew.-%, insbesondere 11 bis 22, besonders bevorzugt 12 bis 18 Gew.-%, Vinylalkoholeinheiten und vorzugsweise 0 bis 3 Gew.-%, insbesondere 1 bis 3, besonders bevorzugt 2 bis 3 Gew.-%, Vinylacetateinheiten, bezogen auf das gesamte Polyvinylbutyralpolymerisat, enthalten.

Die Herstellung der Polyvinylacetale kann nach üblichen bekannten Methoden, z.B. vorzugsweise aus Polyvinylalkoholen und Aldehyden unter Zusatz eines sauren Katalysators, vorzugsweise in wäßriger Lösung, erfolgen. Die in dem vorzugsweise verwendeten Polyvinylbutyral (PVB) gegebenenfalls enthaltenen Vinylalkoholeinheiten und Vinylacetateinheiten können bei Verwendung von Ausgangspolyvinylalkoholen resultieren, wie sie durch Hydrolyse von Polyvinylacetat erhalten werden können und noch restliche Vinylacetateinheiten in ihren Makromolekülen enthalten. Das Molekulargewicht der Polyvinylacetale kann in einem weiten Bereich variieren. Als Maßzahl kann z.B. das Molekulargewicht des dem Polyvinylacetal zugrunde liegenden Ausgangspolyvinylalkohols herangezogen werden. Bevorzugt verwendet werden Polyvinylalkohole mit Molekulargewichten zwischen etwa 2000 und etwa 250000, insbesondere etwa 10000 bis etwa 100000, wobei diese Polyvinylalkohole teil- bis vollverseift sein können. Als vollverseift gelten dabei Polyvinylalkohole, bei denen zwischen 98 und 100 % der ursprünglichen Vinylestereinheiten zu Vinylalkoholeinheiten verseift sind. Bevorzugt werden vollverseifte Ausgangspolyvinylalkohole eingesetzt.

Als Maß für das Molekulargewicht der Polyvinylacetale kann ferner deren Viskosität in organischen Lösungsmitteln, wie z.B. in Methanol oder n-Butanol, dienen. So liegt z.B. die Viskosität erfindungsgemäß verwendeter Polyvinylbutyrale (PVB), gemessen in 6 gew.-%iger methanolischer Lösung bei 20°C nach Höppler (DIN 53015), vorzugsweise im Bereich von 1 bis 300 mPa·s, insbesondere 10 bis 200, besonders bevorzugt 15 bis 110 mPa·s. Im allgemeinen wird den Polyvinylacetalen aus dem höhermolekularen Teil des Molekulargewichtsbereiches der Vorzug gegeben.

Die Dichte der vorzugsweise verwendeten PVB-e bei 20°C beträgt bevorzugt oa. 1,1 g/ccm, das Schüttgewicht der feinteiligen bis granulatförmigen Produkte liegt insbesondere im Bereich von 150 bis 250 g pro Liter. Letztere Produkte fallen bei der Herstellung unmittelbar als weiße, feinpulverige Granulate an. Der Schmelzpunkt der PVB-e liegt im allgemeinen vorzugsweise oberhalb von 120°C.

Der mittlere Partikeldurchmesser von erfindungsgemäß zu verwendenden Polyvinylacetalen liegt vorzugsweise im Bereich von 0,1 bis 2,5 mm, insbesondere 0,2 bis 0,8, besonders bevorzugt 0,3 bis 0,5 mm. Ganz besonders bevorzugt beträgt er 0,4 mm.

Die erfindungsgemäß zu verwendenden feinteiligen bis granulatförmigen Polyvinylbutyralpartikel besitzen vorzugsweise eine poröse Struktur.

Sie sind weder in Wasser noch in den als Adsorbatkomponenten vorgesehenen Verbindungen aus der Gruppe Mineralöle, Esteröle, flüssige Kohlenwasserstoffe, flüssige inerte organische Verbindungen oder deren Gemischen löslich und können bis zum Doppelten ihres Eigengewichts, vorzugsweise mehr als das Doppelte ihres Eigengewichts, an Adsorbat adsorptiv binden.

Erfindungsgemäß zu verwendende Adsorptionsmittel bestehen besonders bevorzugt aus Polyvinylbutyral.

In einer weiteren bevorzugten Variante stellt das Adsorptionsmittel ein flächiges Gebilde, vorzugsweise in Form von öldurchlässigen Folien, Matten, Planen oder Vliesen, insbesondere sandwichförmigen flächigen Gebilden mit Polyvinylacetalpartikel enthaltenden Multikammerstrukturen, dar, das Polyvinylacetal, vorzugsweise PVB, in gleichmäßigen, auslaufgesicherten Schüttungen, vorzugsweise in Schichtdicken von 0,5 bis 5 cm, enthält.

Die Verwendung erfindungsgemäßer Adsorptionsmittel erfolgt bevorzugt in der Weise, daß man die zu entsorgende bzw. zu adsorbierende Flüssigkeit in der erforderlichen Aufwandmenge, bezogen auf das zu entsorgende Adsorbat, mit dem Adsorptionsmittel bestreut bzw. mit einem erfindungsgemäß flächigen Adsorptionsmittel belegt bzw. in Kontakt bringt und nach Beendigung des Adsorptionsvorganges das mit Adsorbat belegte Adsorptionsmittel, insbesondere in partikulierter Form, vorzugsweise ohne anhaftende flüssige Ölreste, einsammelt und gegebenenfalls nachfolgend entsorgt, vorzugsweise durch Verbrennung oder aber durch Deponieren oder ggf. durch Aufarbeitung. Das Einsammeln kann dabei z.B. durch Zusammenkehren, durch Absaugen oder aber auf Wasseroberflächen z.B. durch Abschöpfen erfolgen. Das voll mit flüssigem Adsorbat belegte Adsorptionsmittel soll beim Einsammeln und beim Transport möglichst keinen sehr hohen Pressdrucken ausgesetzt werden, da dies in manchen Fällen zum Freisetzen von flüssigem Adsorbat führen kann. Andererseits können mit Adsorbat beladene Adsorptionsmittel, die im allgemeinen in loser, partikulärer Form anfallen, in geeigneten Pressen unter teilweiser Entölung z.B. brikettiert und die resultierenden Briketts verbrannt oder deponiert werden.

Mit Adsorbat übersättigte erfindungsgemäße Adsorptionsmittel können in manchen Fällen auch gelartige Massen bilden, die sich puddingartig verhalten und sich leicht zerteilen und einsammeln und einer Entsorgung zuführen lassen. Solche gelartigen Massen können vorzugsweise beim Kontakt mit solchen Adsorbaten entstehen, welche das Polyvinylacetal zwar zum quellen bringen, es aber nicht lösen können.

Eine besonders interessante Anwendung erfindungsgemäßer Adsorptionsmittel besteht ferner u.a. darin, daß man äußere Schmieröl- oder Hydraulikölverschmutzungen an Maschinen unschwer beseitigen kann, indem man die verölten Flächen mit ausreichenden Mengen feinteiliger Polyvinylacetale bestreut und nach erfolgter Adsorption das mit Adsorbat beladene Adsorptionsmittel mit einem Besen wegkehrt oder absaugt, einsammelt und beseitigt. Die Maschinen können dadurch leicht und ohne Naßwäsche von äußerlich anhaftendem Öl befreit werden, insbesondere ohne dabei gegebenenfalls an den Maschinen Schäden an Gleitflächen, Lagerschäden, Korrosionsschäden oder Oberflächenschäden zu riskieren, wie dies z.B. bei analoger Verwendung von üblichen körnigen anorganischen Adsorptionsmitteln befürchtet werden müßte.

Besonders vorteilhaft läßt sich vorzugsweise PVB zur Adsorption von leichtem Heizöl verwenden, wobei der Aufsaugvorgang beim Aufstreuen des PVB sofort einsetzt und die Adsorption bereits nach wenigen Minuten beendet sein kann. Dabei geliert das PVB nicht, sondern es bleibt nach erfolgter adsorptiver Beladung mit leichtem Heizöl körnig und fest. PVB ist daher insbesondere geeignet, ausgelaufene Heizöllachen, z.B. auf Betonflächen oder Straßen, als Sofortmaßnahme mit einem Sperrgürtel aus einer PVB-Streuschicht zu umranden und dadurch ein weiteres Ausbreiten der Öllache zu begrenzen.

Um störenden Windverfrachtungen entgegenzuwirken, werden bei der Verwendung von z.B. PVB im Freien mittlere Partikeldurchmesser von mindestens 1 mm, vorzugsweise 1 bis 2,5 mm, bevorzugt.

Vorzugsweise lassen sich erfindungsgemäße Adsorptionsmittel insbesondere zum Aufsaugen bzw. Binden und gegebenenfalls nachfolgenden üblichen Entsorgen oder Aufarbeiten von gegebenenfalls die Umwelt unter entsprechenden bedrohlichen Bedingungen akut belastenden Produkten aus der Gruppe Erdöl, Teeröl, Schmieröl, Schmierfett, Mineralöl, Petroleum, Hydrauliköl, Paraffinöl, Spindelöl, leichtes und schweres Heizöl, Dieselöl, Kerosin, Benzin, Benzol, flüssige organische Pestizide oder Pestizidlösungen, pflanzliche Öle und Fette, tierische Öle und Fette, gegebenenfalls wäßrige Emulsionen oder Suspensionen der genannten Produkte, verwenden. Die wäßrigen Emulsionen oder Suspensionen lassen sich vorteilhaft durch Behandlung mit feinteiligen Polyvinylacetalen adsorptiv extrahieren. Auch ölverschmutztem Wasser kann Öl entzogen werden, wenn man es über ein Filter aus vorzugsweise grob- und feinkörnigem PVB filtriert.

## Patentansprüche

1. Festes Adsorptionsmittel zum Aufsaugen bzw. Binden von Adsorbaten aus der Gruppe Mineralöle, Esteröle, flüssige Kohlenwasserstoffe, flüssige inerte organische Verbindungen oder deren Gemischen, wobei das Adsorptionsmittel in den Adsorbaten keine wesentliche Löslichkeit besitzt und die Adsorbate mit Wasser nicht mischbar sind, dadurch gekennzeichnet, daß das Adsorptionsmittel ein feinteiliges bis granulatförmiges, in Wasser nicht lösliches Polyvinylacetal enthält.

2. Festes Adsorptionsmittel nach Anspruch 1, dadurch gekennzeichnet, daß das Polyvinylacetal Acetalreste mit 1 bis 12 C-Atomen, vorzugsweise 1 bis 8, insbesondere 2 bis 6 C-Atomen, enthält.

3. Festes Adsorptionsmittel nach Anspruch 1 oder 2, dadurch gekennzeichnet, daß es Polyvinylbutyral enthält.

4. Festes Adsorptionsmittel nach einem oder mehreren der Ansprüche 1 bis 3, dadurch gekennzeichnet, daß es Polyvinylbutyral enthält, dessen Makromoleküle 10 bis 28 Gew.-%, vorzugsweise 11 bis 22, insbesondere 12 bis 18 Gew.-%, Vinylalkoholeinheiten und 0 bis 3 Gew.-%, vorzugsweise 1 bis 3, insbesondere 2 bis 3 Gew.-%, Vinylacetateinheiten, bezogen auf Polyvinylbutyral, enthalten.

5. Festes Adsorptionsmittel nach einem oder mehreren der Ansprüche 1 bis 4, dadurch gekennzeichnet, daß es Polyvinylbutyral enthält, dessen Dichte bei 20°C ca. 1,1 g/ccm beträgt und dessen Schüttgewicht im Bereich von 150 bis 250 g pro Liter liegt.

6. Festes Adsorptionsmittel nach einem oder mehreren der Ansprüche 1 bis 5, dadurch gekennzeichnet, daß es Polyvinylacetal enthält, dessen mittlerer Partikeldurchmesser im Bereich von 0,1 bis 2,5 mm, vorzugsweise 0,2 bis 0,8, insbesondere 0,3 bis 0,5 mm, liegt und besonders bevorzugt 0,4 mm beträgt.

7. Festes Adsorptionsmittel nach einem oder mehreren der Ansprüche 1 bis 6, dadurch gekennzeichnet, daß die Polyvinylacetalpartikel eine poröse Struktur besitzen.

8. Festes Adsorptionsmittel nach einem oder mehreren der Ansprüche 1 bis 7, dadurch gekennzeichnet, daß es Adsorbat bis zum Doppelten seines Eigengewichts, vorzugsweise mehr als das Doppelte seines Eigengewichts, binden kann.

9. Festes Adsorptionsmittel nach einem oder mehreren der Ansprüche 1 bis 8, dadurch gekennzeichnet, daß es aus Polyvinylacetalen besteht.

10. Festes Adsorptionsmittel nach einem oder mehreren der Ansprüche 1 bis 9, dadurch gekennzeichnet, daß es Polyvinylacetal in öldurchlässigen flächigen Gebilden, vorzugsweise öldurchlässigen Folien, Matten, Planen oder Vliesen, insbesondere sandwichförmigen flächigen Gebilden mit Polyvinylacetalpartikel enthaltenden Multikammerstrukturen, enthält.

11. Verwendung fester Adsorptionsmittel nach einem oder mehreren der Ansprüche 1 bis 10, dadurch gekennzeichnet, daß man die Mittel in den erforderlichen Aufwandmengen mit adsorptionsfähigen Stoffen, die Verbindungen aus der Gruppe Mineralöle, Esteröle, flüssige Kohlenwasserstoffe, flüssige organische Verbindungen, deren Lösungen oder deren wäßrige Emulsionen enthalten, in Kontakt bringt, das mit Adsorbat beladene Adsorptionsmittel sammelt, isoliert und gegebenenfalls nachfolgend aufarbeitet oder entsorgt, vorzugsweise durch Verbrennung oder Deponieren.

12. Verwendung fester Adsorptionsmittel nach einem oder mehreren der Ansprüche 1 bis 11 zum Aufsaugen bzw. Binden und gegebenenfalls nachfolgenden Entsorgen oder Aufarbeiten von gegebenenfalls die Umwelt akut belastenden Produkten aus der Gruppe Erdöl, Teeröl, Schmieröl, Schmierfett, Mineralöl, Petroleum, Hydrauliköl, Paraffinöl, Spindelöl, leichtes und schweres Heizöl, Dieselöl, Kerosin, Benzin, Benzol, flüssige organische Pestizide oder Pestizidlösungen, pflanzliche Öle und Fette, tierische Öle und Fette, gegebenenfalls wäßrige Emulsionen oder Suspensionen der genannten Produkte.

**Patentansprüche für folgenden Vertragsstaat: ES**

1. Verfahren zum Aufsaugen bzw. Binden von Adsorbaten aus der Gruppe Mineralöle, Esteröle, flüssige Kohlenwasserstoffe, flüssige inerte organische Verbindungen oder deren Gemischen mit einem festen Adsorptionsmittel, wobei das Adsorptionsmittel in den Adsorbaten keine wesentliche Löslichkeit besitzt und die Adsorbate mit Wasser nicht mischbar sind, dadurch gekennzeichnet, daß man das Adsorptionsmittel, welches ein feinteiliges bis granulatförmiges, in Wasser nicht lösliches Polyvinylacetal enthält, in der erforderlichen Aufwandmenge mit den Adsorbaten in Kontakt bringt.

2. Verfahren nach Anspruch 1, dadurch gekennzeichnet, daß das Polyvinylacetal Acetalreste mit 1 bis 12 C-Atomen enthält.

3. Verfahren nach Anspruch 1, dadurch gekennzeichnet, daß das feste Adsorptionsmittel Polyvinylbutyral enthält.

4. Verfahren nach einem oder mehreren der Ansprüche 1 bis 3, dadurch gekennzeichnet, daß das feste Adsorptionsmittel Polyvinylbutyral enthält, dessen Makromoleküle 10 bis 28 Gew.-%, vorzugsweise 11 bis 22, insbesondere 12 bis 18 Gew.-%, Vinylalkoholeinheiten und 0 bis 3 Gew.-%, vorzugsweise 1 bis 3, insbesondere 2 bis 3 Gew.-%, Vinylacetateinheiten, bezogen auf Polyvinylbutyral, enthalten.

5. Verfahren nach einem der Ansprüche 1 bis 4, dadurch gekennzeichnet, daß das feste Adsorptionsmittel Polyvinylbutyral enthält, dessen Dichte bei 20 °C ca. 1,1 g/ccm beträgt und dessen Schüttgewicht im Bereich von 150 bis 250 g pro Liter liegt.

6. Verfahren nach einem der Ansprüche 1 bis 5, dadurch gekennzeichnet, daß das feste Adsorptionsmittel Polyvinylacetal enthält, dessen mittlerer Partikeldurchmesser im Bereich von 0,1 bis 2,5 mm, vorzugsweise 0,2 bis 0,8, insbesondere 0,3 bis 0,5 mm, liegt und besonders bevorzugt 0,4 mm beträgt.

7. Verfahren nach einem der Ansprüche 1 bis 6, dadurch gekennzeichnet, daß die Polyvinyacetalpartikel des festen Adsorptionsmittels eine poröse Struktur besitzen.

8. Verfahren nach einem oder mehreren der Ansprüche 1 bis 7, dadurch gekennzeichnet, daß das feste Adsorptionsmittel Adsorbat bis zum Doppelten seines Eigengewichts, vorzugsweise mehr als das Doppelte seines Eigengewichts bindet.

9. Verfahren nach einem oder mehreren der Ansprüche 1 bis 8, dadurch gekennzeichnet, daß das feste Adsorptionsmittel aus Polyvinylacetalen besteht.

10. Verfahren nach einem oder mehreren der Ansprüche 1 bis 9, dadurch gekennzeichnet, daß das feste Adsorptionsmittel Polyvinylacetal in öldurchlässigen flächigen Gebilden, vorzugsweise öldurchlässigen Folien, Matten, Planen oder Vliesen, insbesondere sandwichförmigen flächigen Gebilden mit Polyvinylacetalpartikel enthaltenden Multikammerstrukturen enthält.

11. Verwendung fester Adsorptionsmittel nach Verfahren gemäß einem oder mehreren der Ansprüche 1 bis 10, dadurch gekennzeichnet, daß man die Mittel in den erforderlichen Aufwandmengen mit adsorptionsfähigen Stoffen, die Verbindungen aus der Gruppe Mineralöle, Esteröle, flüssige Kohlenwasserstoffe, flüssige organische Verbindungen, deren Lösungen oder deren wäßrige Emulsionen enthalten, in Kontakt bringt, das mit Adsorbat beladene Adsorptionsmittel sammelt, isoliert und gegebenenfalls nachfolgend aufarbeitet oder entsorgt, vorzugsweise durch Verbrennung oder Deponieren.

12. Verwendung fester Adsorptionsmittel nach einem oder mehreren der Ansprüche 1 bis 11 zum Aufsaugen bzw. Binden und gegebenenfalls nachfolgenden Entsorgen oder Aufarbeiten von gegebenenfalls die Umwelt akut belastenden Produkten aus der Gruppe Erdöl, Teeröl, Schmieröl, Schmierfett, Mineralöl, Petroleum, Hydrauliköl, Paraffinöl, Spindelöl, leichtes und schweres Heizöl, Dieselöl, Kerosin, Benzin, Benzol, flüssige organische Pestizide oder Pestizidlösungen, pflanzliche Öle und Fette, tierische Öle und Fette, gegebenenfalls wäßrige Emulsionen oder Suspensionen der genannten Produkte.

Europäisches
Patentamt

**EUROPÄISCHER
RECHERCHENBERICHT**

Nummer der Anmeldung

**EP 91 10 3760**

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| A | FR-A-2 605 014   (INPAL EXPANSION)<br>* Seite 1, Zeilen 1-21,25-40; Ansprüche *<br>– – – | 1,11,12 | C 09 K 3/32<br>C 02 F 1/68 |
| A | DE-A-2 229 361   (L. SCHULER GmbH)<br>* Das ganze Dokument *<br>– – – | 1,11,12 | |
| A | FR-A-2 478 663   (CHAUDRONNERIE TUYAUTERIE DE BRAQUES)<br>* Seite 1, Zeilen 1-20; Seite 2, Zeilen 12-18; Ansprüche *<br>– – – | 1,11,12 | |
| A | WORLD PATENT INDEX, LATEST, Derwent Publications Ltd, London, GB;<br>& JP-A-59 173 135 (KANEBO K.K.)<br>* Die ganze Zusammenfassung *<br>– – – | 1,2,7,8 | |
| A | WORLD PATENT INDEX, LATEST, Derwent Publications Ltd, London, GB;<br>& JP-A-54 052 195 (KANEBO K.K.)<br>* Die ganze Zusammenfassung *<br>– – – – – | 1,2 | |
| | | | **RECHERCHIERTE SACHGEBIETE (Int. Cl.5)**<br><br>C 09 K<br>C 02 F |

Der vorliegende Recherchenbericht wurde für alle Patentansprüche erstellt

| Recherchenort | Abschlußdatum der Recherche | Prüfer |
|---|---|---|
| Den Haag | 21 Mai 91 | LEDER M. |